# EUROPEAN PATENT APPLICATION

(11) **EP 0 799 747 A2**
(43) Date of publication of application: **08.10.1997**
(21) Application number: 97100526.9
(22) Date of filing: 15.01.1997
(51) Int. Cl.: B60R 11/02

(54) **Openable/closeable protection cover mechanism for electronic devices installable in motor vehicles**

(30) Priority: 07.04.1996 JP 111245/96
(71) Applicant: AISIN AW CO., LTD., Anjo-shi Aichi-ken 444-11 (JP)
(72) Inventor: Fukatsu, Hironari, Anjo-shi, Aichi-ken, 444-11 (JP); Tsuchiya, Naoki, Anjo-shi, Aichi-ken, 444-11 (JP)
(74) Representative: VOSSIUS & PARTNER

(57) **Abstract**

A slidable protection cover mechanism for use in an on-vehicle electronic device is constituted from an operation knob as operated by the operator to move laterally, a lateral-direction guide mechanism for guiding the operation knob to move in the lateral direction, a conversion mechanism for converting the lateral movement of the operation knob into movement in another direction, and an openable/closeable member for opening and closing an opening in accordance with the movement of the operation knob. When the operator manually operates the knob to move or slide laterally, the openable/closeable member is driven to open and close the opening in accordance with lateral movement of the knob. This may eliminate erroneous open/closure operations otherwise occurring due to a contact of the operator or passengers while enhancing space-saving and mountability.

## Description

The present invention relates to electronic devices adaptable for use in motor vehicles, and more particularly to openable and closeable protective cover or shutter mechanism for use as a dust protection shield for the storage medium loading gate of on-vehicle electronic devices.

Recently, advanced on-vehicle electronic devices including audio or video playback machines and vehicle navigation systems come with front-loading large-capacity storage medium drive modules as installed in the dashboard of motor vehicles. The storage medium may typically include a disk-like data recording carrier body, such as a compact disc (CD) for audio or video playback, or a CD read-only memory (CD-ROM) disk for external data bank of navigation systems. These drive modules have an installable enclosure or housing which includes a front panel with a thin elongate opening for permitting manual loading of a disk-like medium into a playback position therein. The opening is commonly protected by a door. The working mechanism, read/write heads and associative electronics are protected by this door. This door opening is susceptible to receiving foreign objects or contaminants which can damage the sensitive inner workings. In this respect, a dust protection shield is inevitable for such on-vehicle front-loading CD drives.

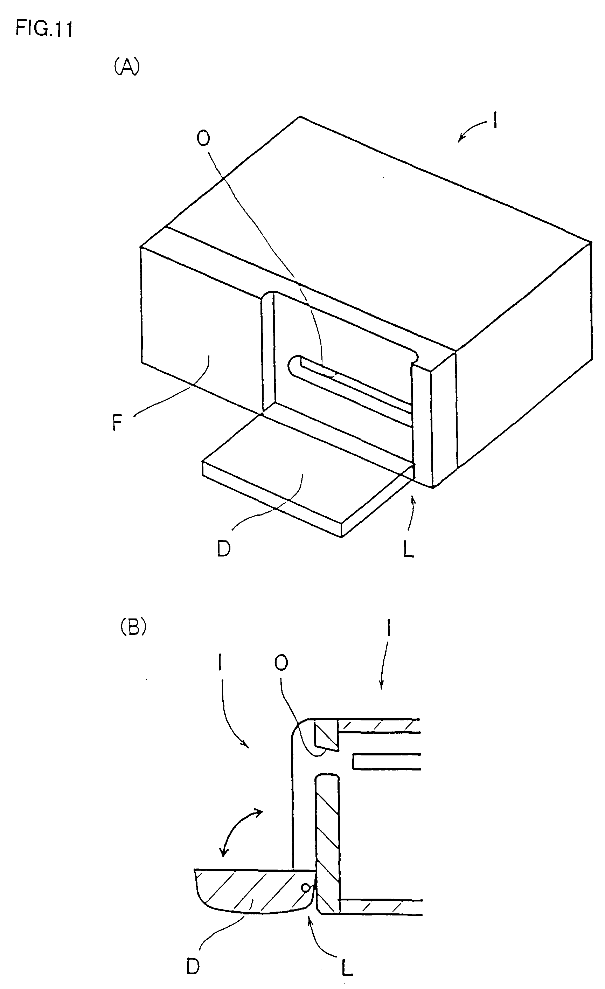

One prior known protective cover mechanism for use in on-vehicle electronic devices is shown in Figs. 11A and 11B, wherein an on-vehicle electronic device I includes a front panel F having a door D which is pivotally movable about a lower edge L thereof upon manual operation by the operator in a direction parallel to the vehicle's direction of travel, thereby to directly open and close a CD loading gate opening O associated therewith.

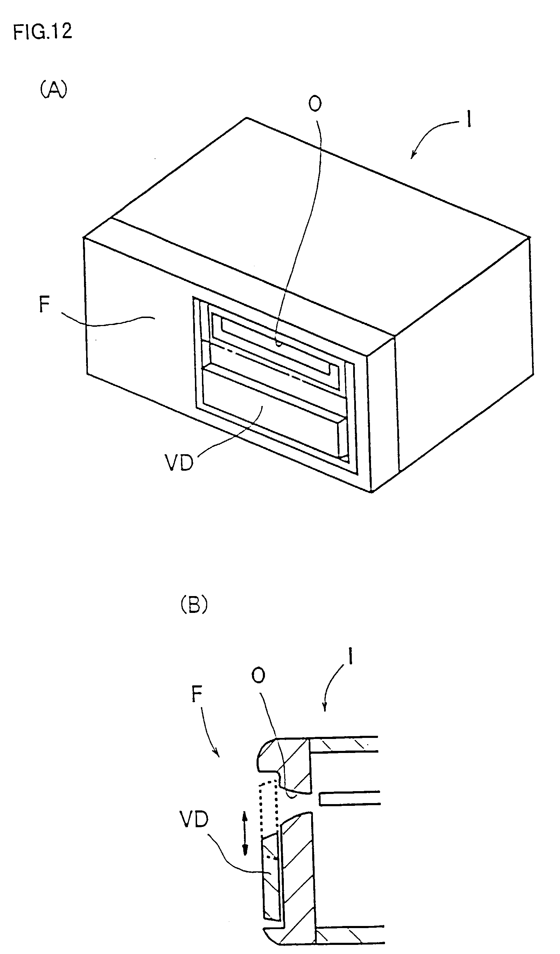

Another prior art protection cover mechanism is shown in Figs. 12A and 12B, wherein the on-vehicle electronic device I is provided with a front panel F having a vertically slidable door VD which may shift in position upward and downward in front of the CD loader gate opening O. Upon manual activation by the operator, the door VD changes its position to directly open and close the CD loading gate opening O.

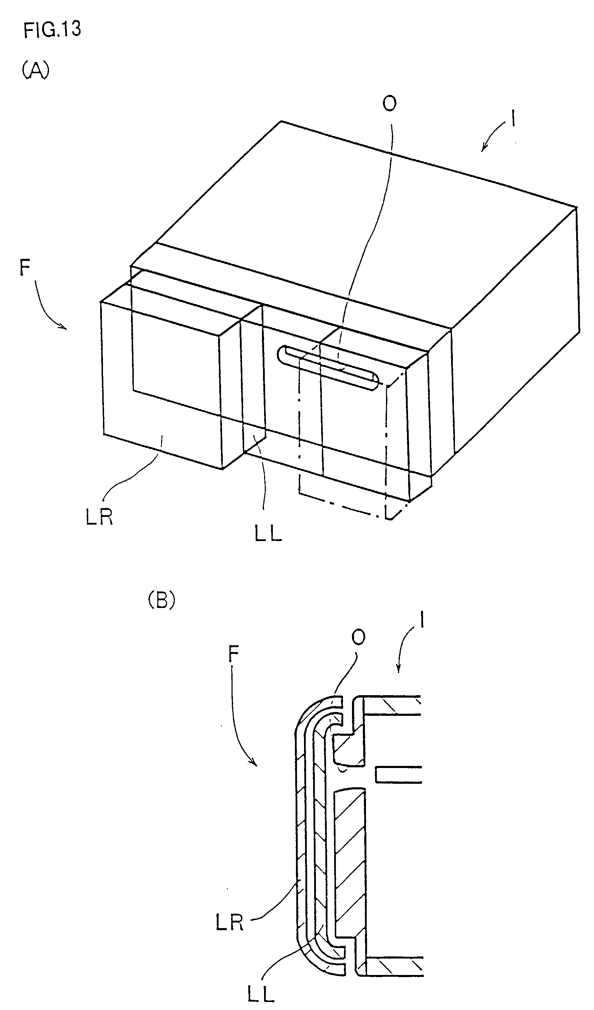

A further prior art cover mechanism is shown in Figs. 13A and 13B, wherein the on-vehicle electronic device I has its front panel F which is structured from two split, right and left door members LR, LL. These doors are laterally movable in front of the CD loader opening O in such a way that these are laterally shifted in position upon activation by the operator while they overlap each other, thereby directly opening and closing the CD load opening O.

The pivotable protection cover mechanism shown in Figs. 11A and 11B is designed in such a manner that the door D acts to directly open and close the CD loading gate opening O by pivotally moving about the lower edge of the door D in the direction parallel to the vehicle's travel direction when operated by the operator. When the door D opens, it projects toward the operator. With such an arrangement, an extra space must be needed for permitting projection of the door D when opened. This undesirably serves to decrease mountability. In addition, the prior art suffers from the risk of accidentally opening and closing the door due to occurrence of a contact with the bodies of the operator and of fellow passengers.

A disadvantage of the vertically slidable cover mechanism of Figs. 12A and 12B is that since this is designed such that the up/down door VD changes its position upon activation by the operator in front of the CD load opening O to directly open and close the opening O, erroneous open/close operations can happen due to a contact with the operator and passengers. Furthermore, this prior art suffers from a problem that an additional mechanism should be required to prevent the door from attempting to drop down by its own weight.

A disadvantage of the two-split slidable cover mechanism shown in Figs. 13A and 13B is as follows. Since this prior art is arranged so that the gate opening O is opened and closed by the operator by sliding together the two-split laminated right and left doors LR, LL in the lateral direction of the vehicle, an extra thickness (space) must be needed to allow them to overlap each other in the forward and backward directions of the vehicle. This in turn leads to a decrease in mountability of the on-vehicle electronic device.

Another disadvantage of the prior art of Figs. 13A and 13B is that where one door with a width covering the CD loading gate opening O is to be slided laterally, when opened, this door it projects from one edge along the width of the on-vehicle electronic device. This leads to the risk of erroneous open/close operations when the operator or his or her passenger is brought into contact with such projected portion of the door, resulting in a decrease in mountability.

It is therefore an object of the present invention to provide an improved protective cover mechanism for on-vehicle electronic devices capable of avoiding the problems as encountered with the prior art.

It is another object of the invention to provide an improved openable and closeable protective cover mechanism for on-vehicle electronic devices capable of improving mountability while increasing reliability and yet reducing complexity.

It is a further object of the invention to provide an improved openable/closeable protection cover mechanism for on-vehicle electronic devices capable of improving mountability while eliminating erroneous open/closure operations otherwise occurring due to unintentional or accidental contact of the operator or passengers with space saving attained.

To attain the foregoing objects, the invention provides a specific protection cover mechanism for use in an on-vehicle electronic device, including an operation knob being laterally movable upon activation by an operator, and an openable/closeable member for opening and closing an opening in accordance with lateral movement of the operation knob.

In accordance with one aspect of the invention, the mechanism also includes a lateral guide mechanism for laterally guiding the operation knob.

In accordance with another aspect of the invention the mechanism further includes a conversion mechanism for converting lateral movement of the operation knob into movement in another direction.

In accordance with still another aspect of the invention the mechanism is with a switch for detection of the lateral movement of the operation knob in response to the operator's operation, and a driver device responsive to an output signal of the switch for driving the openable/closeable member to open and close the opening.

These and other objects, features and advantages of the invention will be apparent from the following more particular description of preferred embodiments of the invention, as illustrated in the accompanying drawings.

Fig. 1 is a partial front view of a CD loading gate protection cover mechanism for use in on-vehicle electronic devices in accordance with one preferred embodiment of the present invention, wherein an opening is in the closed or blocked state.

Fig. 2 is a partial front view of the protection cover mechanism shown in Fig. 1, wherein the opening is in the opened or unblocked state.

Fig. 3 is a cross-sectional view of the mechanism in which the opening is in the closed state.

Fig. 4 is a cross-sectional view of the mechanism with the opening in the opened state.

Fig. 5 is a perspective view of the mechanism with the opening blocked.

Fig. 6 is a perspective view of the mechanism with the opening unblocked.

Figs. 7 to 10 are diagrams each for explanation of a conversion mechanism in protection cover mechanisms in accordance with further embodiments of the invention.

Figs. 11A, 12A and 13A are perspective views of prior known protection cover mechanisms, and Figs. 11B-13B are cross-sectional views of the main part of each of the prior art of the preceding figures.

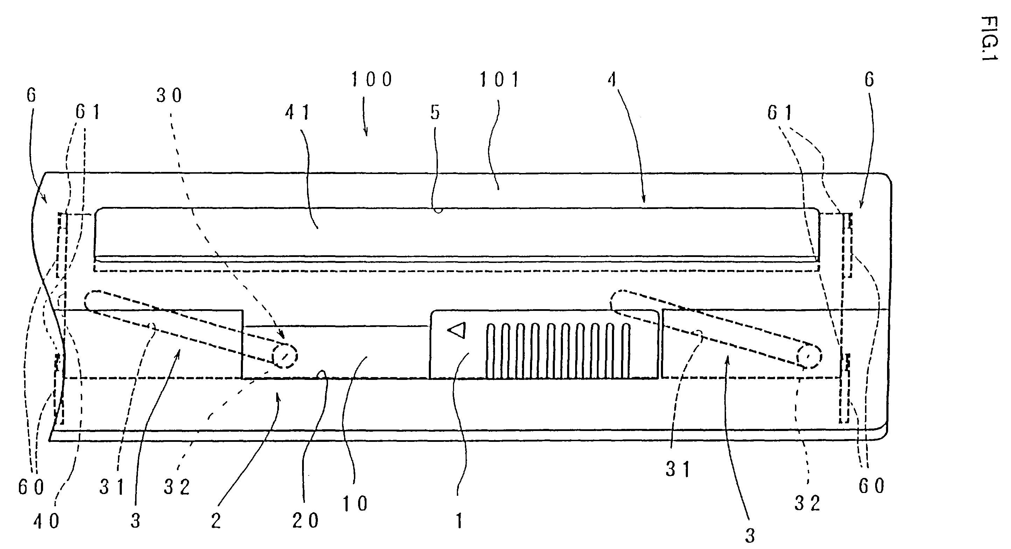

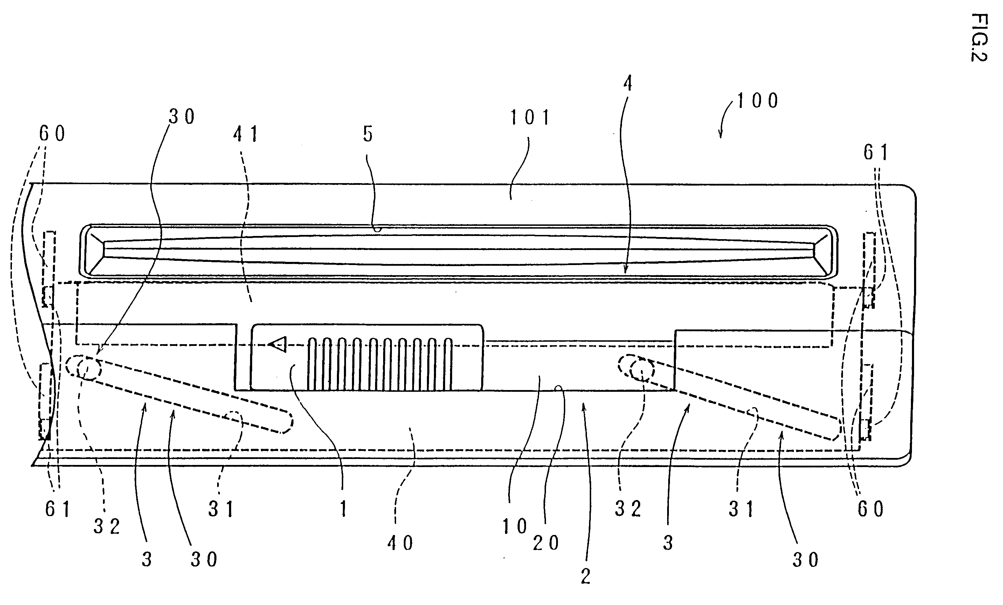

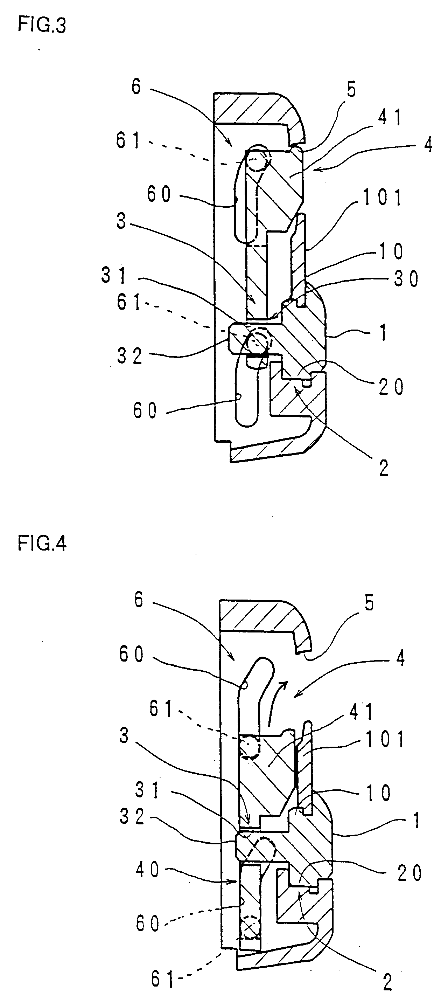

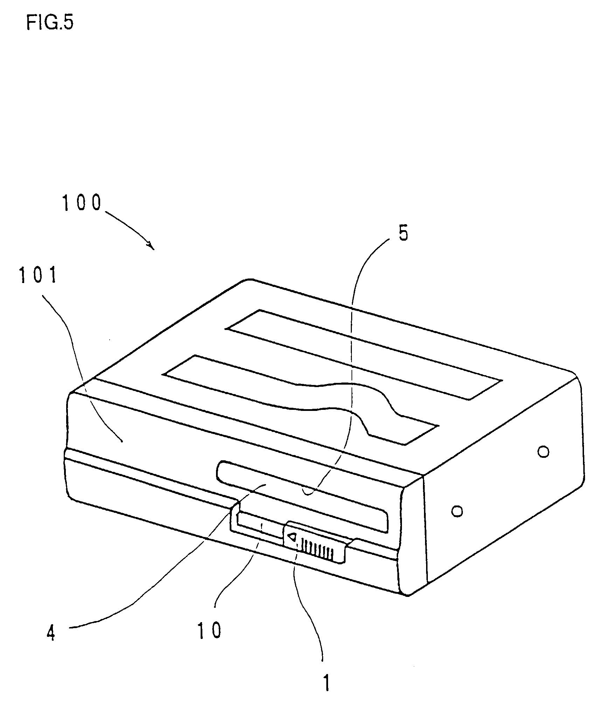

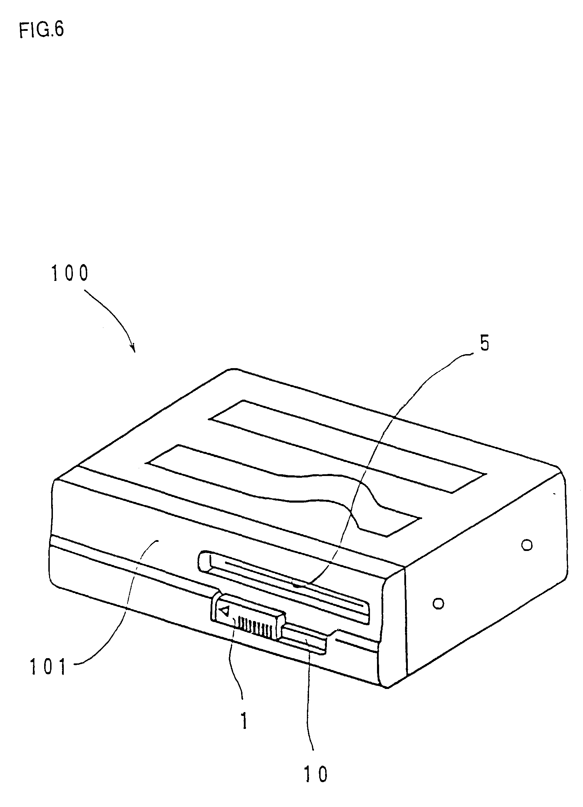

A protection cover mechanism for on-vehicle electronic devices in accordance with one preferred embodiment of the instant invention is shown in Figs. 1 through 6. As shown, a front-loading electronic device 100 has a front panel 101 with a laterally elongated rectangular opening 5 for permitting manual loading of a disk-like data carrier body, such as an audio or video CD, a CD-ROM disk, or the like. The electronic device 100 also includes an operation knob 1 which is manually activated by the operator to move laterally, a lateral direction guide mechanism 2 for guiding the operation knob 1 to move or slide in the lateral direction, a conversion mechanism 3 for converting the lateral movement of the operation knob 1 into movement in another direction, and an openable/closeable member 4 which acts to open and close the opening 5 in accordance with movement of the operation knob 1.

In the on-vehicle electronic device 100, the opening 5 acting as a CD loading gate is laterally formed at the upper section of a front panel 101 which exhibits a square bracket(])-like lateral profile constituting the front face. Another laterally elongated rectangular opening 20 is formed in the front panel for constituting the lateral direction guide mechanism 2 that laterally guides a lever 10 (to be later described), which is integrally formed with the operation knob 1 at the lower section of the opening 5.

The operation knob 1 has rectangular projections with a number of longitudinal grooves, which projections are centrally formed on the front surface of the rectangular lever 10 that is laterally movably inserted into the lateral guide opening 20 of the front panel.

The lateral direction guide mechanism 2 has the rectangular opening 20 as formed to laterally elongate at the lower section of the front panel, for guiding the lever 10 and operation knob 1 along the opening 20 in the lateral direction (width direction) of the on-vehicle electronic device 100.

The conversion mechanism 3 is structured from a pair of parallel linear slots 31 formed to extend slantwise spanning from the upper left to the lower right portion at the lower section of a substantially rectangular movable member 40 as disposed vertically movably within the front panel 101, and a small-diameter cylindrical projection 32 which is formed projecting toward a surface opposite to the surface on which the operation knob 1 is formed at the both ends of the lever as engaged with the slots.

In the case where the operation knob 1 and lever 10 are at the right edge position in the lateral direction, the small projections 32 push the slots 31 toward the uppermost so that the movable member 40 comes at the uppermost position. By causing the operation knob 1 and lever 10 to move toward the left side from the right edge position, the small projections 32 push the slots 31 downwardly letting the movable member 40 move downward gradually so that these slots are finally located at the lowermost position.

In other words, in this embodiment, the conversion mechanism 3 is structured from an up/down direction conversion mechanism 30 which serves to converts the lateral movement of the operation knob 1 into upward/downward movements.

The openable/closeable member 4 includes a rectangular projecting section 41 which is formed to project at the upper section of the movable member 40 and acts as a door insertable into the rectangular opening 5 that functions as the CD loading gate formed at the upper section of the front panel 101.

The up/down movement mechanism 6 for moving the openable/closeable member 4 upwardly and downwardly is provided with two slightly curved grooves 60 formed at the upper and lower sections in the internal wall of the front panel 101. The small cylindrical projections 61 less in diameter, which are formed to project outward at the opposite edge sides of a side wall along the width of the movable member 40, are inserted into the grooves 60 respectively for guiding vertical movement of the movable member 40; simultaneously, the projections 61 attempt to frontally project with an upward movement causing the rectangular projection 41 constituting the openable/closeable member 4 to be inserted into the CD loading gate opening 5.

The up/down movement mechanism 6 serves as a guide for permitting movement of the movable member 40 by operating upward or downward with respect to the slots 31 due to the lateral movement of the small projections 32 as has been discussed previously. The up/down movement mechanism 6 also constitutes part of the up/down direction conversion mechanism constituting the conversion mechanism 3.

Accordingly, as has been described above, the conversion mechanism 3 and openable/closeable member 4 are formed integrally with the movable member 40.

In the opening protection cover mechanism for on-vehicle electronic devices in accordance with one embodiment of the invention thus arranged above, when the operation knob 1 is laterally moved upon manual operation by the operator while being guided by the lateral direction guide mechanism 2, that is, when the operation knob 1 and lever 10 are laterally moved toward the right edge, the small projections 32 formed at the opposite edge sides of the lever 10 push the slots 31 upwardly causing the movable member 40 to move upward accordingly.

When the movable member 40 moves upward, since the small cylindrical projections 61 of less diameter which are formed to project at the both side-wall edges along the width of the movable member 40 are inserted into the two slightly curved grooves 60 formed at the upper and lower positions in the inner wall of the front panel 101, they guide up/down movements of the movable member 40 and also project frontally in accordance with such upward movement thereof, allowing the rectangular projections 41 constituting the openable/closeable member 4 to be inserted into the rectangular opening 5 closing this opening 5.

When the operation knob 1 and lever 10 are operated to move from the right edge position toward the left, the small projections 32 attempt to push downwardly the slots 31 formed in the movable member 40 causing the movable member 40 to gradually move downward in such a way that the member 40 is at its lowermost position when the projections are at the leftmost position.

When the movable member 40 moves downward, the movable member 40 is guided backwardly from the upper position at which the projection 41 of the rectangular projection 41 constituting the openable/closeable member 4 is inserted into the rectangular opening 5 and is then guided downward along the two slightly curved grooves 60 as formed at the upper and lower sections on the inner wall of the front panel 101 into which the small cylindrical projections 61 of less diameter formed at the both side-wall edges of the movable member 40 are inserted; when the projection 41 reaches the operation knob 1 and lever 10, it is aligned in position with the lower edge position causing the opening 5 to open.

An advantage of the protection cover mechanism for on-vehicle electronic devices shown in Figs. 1 to 6 is that since the openable/closeable member 4 opens and closes the opening 5 according to lateral movement of the operation knob 1 when this knob is laterally moved upon operation by the operator, any doors are no longer required as the openable/closeable member having projectable portions in the vehicle's forward/rearward directions; accordingly, space saving can be attained while eliminating any erroneous open/close operations otherwise occurring due to a contact with the operator, thereby enhancing the mountability.

Another advantage of the embodiment is that since the operation knob 1 which is activated by the operator to move in the lateral direction is guided by the lateral-direction guide mechanism 2 which is constituted from the rectangular opening 20, it becomes possible to smooth or facilitate movement of the operation knob.

Still another advantage of the embodiment is that since the movement of the operation knob 1 is converted by the conversion mechanism 3 into movement in a specific direction allowing the openable/closeable member 4 to open and close the opening 5, it is possible to achieve smooth open/close operations by the openable/closeable member 4 in responding to the lateral movement of the operation knob 1.

Yet another advantage is that the vertical movement of the openable/closeable member 4 can be much smoothed due to the fact that the openable/closeable member 4 is driven to move vertically for opening and closing the opening 5 based on the movement in the converted direction in which the lateral movement of the operation knob 1 has been converted by the up/down slide mechanism 6.

A further advantage is that the vertical movement of the openable/closeable member 4 can be much enhanced in smoothness because of the fact that the lateral movement of the operation knob 1 is converted by the up/down direction conversion mechanism 30, which constitutes the conversion mechanism 3 and which has the function of the up/down slide mechanism 6, into specific vertical movement that allows the openable/closeable member 4 to open and close the opening 5 letting the openable/closeable member 4 move vertically.

A still further advantage is that the movement conversion and the open/close control of opening 5 can be done using simple and low-cost components as a result of the arrangement that the lateral movement is converted to the vertical movement of the openable/closeable member 4 by employing a cooperative combination of the small projections 32 disposed at the both ends of the lever integrally formed with the operation knob 1 and the plurality of slant slots 31 which are formed in the movable member 40 as engaged with the small projections 32.

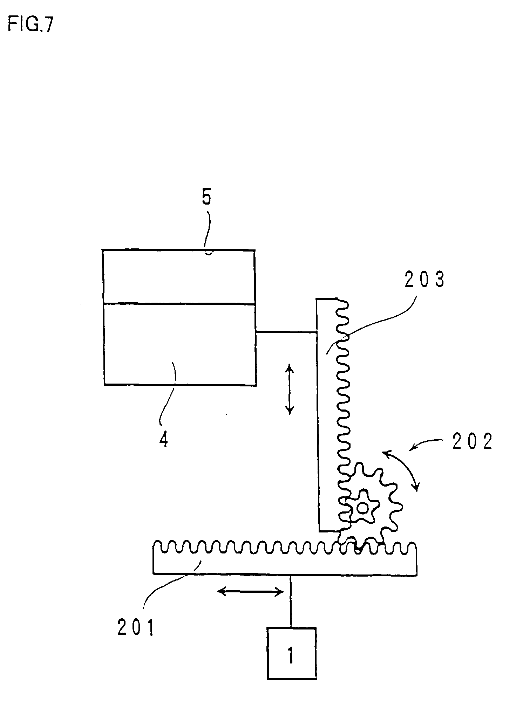

A protection cover mechanism for on-vehicle electronic devices in accordance with another embodiment is shown in Fig. 7, which is arranged such that when a first rack 201 coupled to the operation knob 1 and to the lever is moved laterally, a second rack 203 which is coupled via a pinion 202 to the openable/closeable member 4 acting as the door is caused to move upward and downward letting the opening 5 open and close.

An advantage of the cover mechanism of Fig. 7 is that the operation force as required for the operator to manually activate the operation knob is reduced in magnitude due to the specific arrangement that when the first rack 201 coupled to the operation knob 1 and the lever is moved laterally, the second rack 203 coupled via the pinion 202 to the openable/closeable member 4 acting as the door moves upward and downward opening and closing the opening 5, whereby the lateral movement of the operation knob 1 is converted to rotational movement allowing the openable/closeable member 4 to move upward and downward for opening and closure of the opening 5.

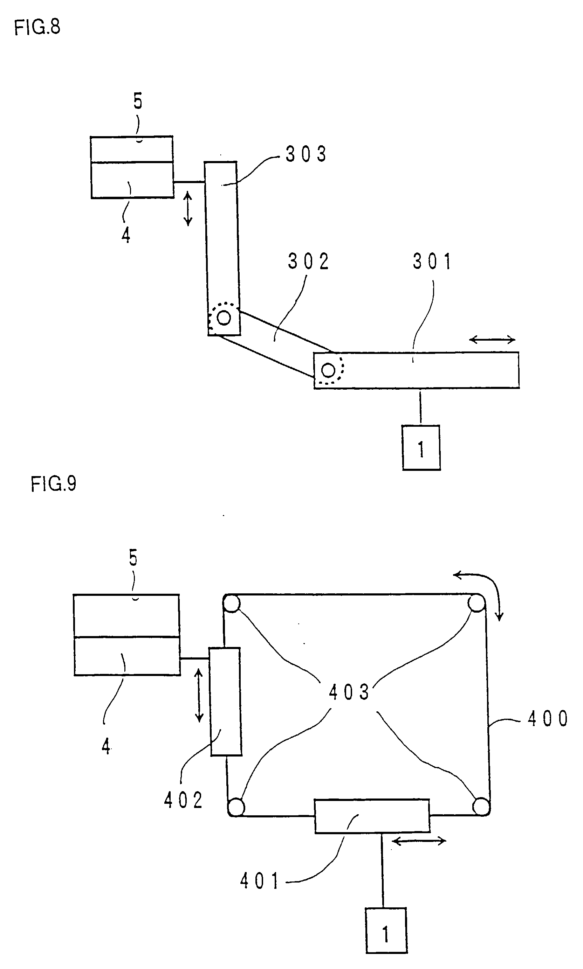

A protection cover mechanism for on-vehicle electronic devices in accordance with a still another embodiment is shown in Fig. 8, which is arranged as follows: When a first link 301 coupled to both the operation knob 1 and the lever moves laterally, a second link 303 which is coupled through a coupler link 302 to the openable/closeable member 4 acting as the door is forced to mode upward and downward letting the opening 5 open and close accordingly.

An advantage of the cover mechanism shown in Fig. 8 is that the opening 5 can be well controlled in open/close operation by use of a simple link mechanism while reducing costs. This can be said because this embodiment is specifically arranged such that when the first link 301 coupled to the operation knob 1 and the lever moves laterally, the second link 303 which is coupled via the coupler link 302 to the openable/closeable member 4 serving as the door is allowed to move upward and downward opening and closing the opening 5 accordingly.

A protection cover mechanism for on-vehicle electronic devices in accordance with a still another embodiment is shown in Fig. 9. As shown, a string 400 is wound over four diagonally disposed pulleys 403. When a first member 401 coupled to the operation knob 1 and the lever disposed at the lower horizontal side moves laterally, a second member 402 which is coupled by the string 400 to the openable/closeable member 4 as disposed on one vertical side is allowed to move upward and downward opening and closing the opening 5 accordingly.

An advantage of the cover mechanism of Fig. 9 is that the activation force required for the operator to operate the operation knob can be further reduced in magnitude. This can be said because the embodiment is specifically configured such that when the first member 401 coupled to the operation knob 1 and the lever at the horizontal side is moved laterally, the second member 402 coupled by the string 400 to the openable/closeable member 4 disposed on the vertical side is forced to move upward and downward opening and closing the opening 5 accordingly, whereby the lateral movement of the operation knob 1 is transmitted by way of the string 400 so that the openable/closeable member 4 moves upward and downward due to rolling of the pulleys 403 opening and closing the opening 5 accordingly.

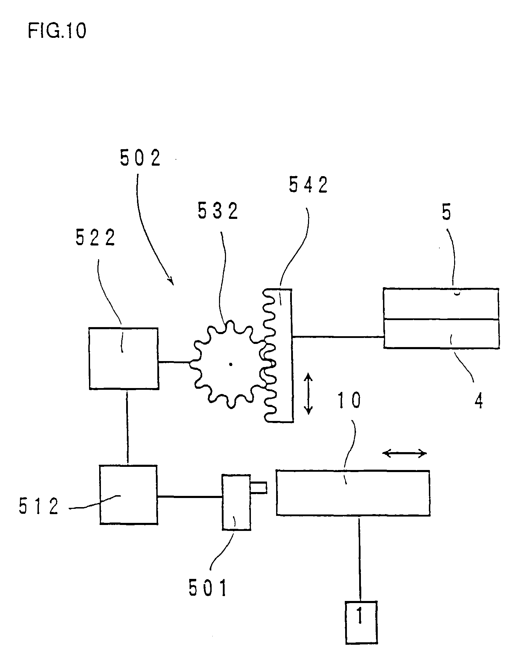

A protection cover mechanism for on-vehicle electronic devices in accordance with a further embodiment is shown in Fig. 10. As shown, the on-vehicle electronic device is provided with a switch 501 that detects lateral movement of the operation knob 1 and lever 10 when operated by the operator, and a driver device 502 for driving the openable/closeable member 4 in a specific direction allowing it to open and close the opening 5 in response to an output signal of the switch 501.

The driver device 502 includes a motor 522 that is driven to rotate in response to a drive output as derived from a controller 512 based on an output signal from the switch 501, a pinion 532 as rotation-driven by the motor 522, and a rack 542 which is vertically movable upon application of the rotation of the pinion 532 and is coupled to the openable/closeable member 4.

In the cover mechanism of Fig. 10, when the operation knob 1 and lever 10 move laterally upon operation by the operator, the switch 501 detects such lateral movement of the operation knob 1; in reply to an output signal of this switch 501, the driver device 502 drives the openable/closeable member 4 via the rack 542 in the upward and downward directions forcing it to open and close the opening 5.

An advantage of the cover mechanism of Fig. 10 is that the operation force as required for the operator to activate the operation knob 1 can be further decreased in magnitude due to employment of a specific configuration that when the operation knob 1 is laterally moved by the operator in the on-vehicle electronic device, the switch 501 detects resultant lateral movement of the operation knob 1 allowing the driver device 502 to drive the openable/closeable member 4 via the rack 542 in response to the output signal of the switch 501 in such a way as to open and close the opening 5 while causing the operation knob 1 and the openable/closeable member 4 to be kept mechanically disengaged from each other.

It will be apparent to those skilled in the art that various modifications can be made to the opening open/closure mechanism for on-vehicle electronic devices of the instant invention without departing from the scope or spirit of the invention, and it is intended that the present invention cover modifications and variations of the open/closure mechanism provided they come within the scope of the appended claims and their equivalents.

For instance, in the illustrative embodiment shown in Fig. 7 as mentioned previously, while the invention has been described by use of a specific example employing therein a combination of the rack and pinion for conversion of the lateral movement of the operation knob into the up/down or vertical movements of the openable/closeable member, the present invention should not be limited to such configuration only; by way of example, another mode may alternatively be used in which a cam is used to rotate causing the openable/closeable member to move upward and downward in accordance with the operation knob's lateral movement.

## Claims

1. A cover structure for use in an on-vehicle electronic device, comprising:
an operation knob being laterally movable upon activation by an operator; and
an openable/closeable member for opening and closing an opening in accordance with lateral movement of said operation knob.

2. The structure as set forth in claim 1 further comprising:
a lateral guide mechanism for laterally guiding said operation knob.

3. The structure as set forth in claim 2 further comprising:
a conversion mechanism for converting lateral movement of said operation knob into movement in another direction.

4. The structure as set forth in claim 3 wherein said openable/closeable member is arranged to be driven by an up/down shift mechanism to move upward and downward.

5. The structure as set forth in claim 4 wherein said conversion mechanism comprises an up/down-direction conversion mechanism for converting the lateral movement of said operation knob into vertical movement.

6. The structure as set forth in claim 5 wherein said up/down-direction conversion mechanism includes a vertically movable member with a plurality of slant slots, and wherein one end of said operation knob is engaged with said slots while said up/down-direction conversion mechanism is operatively coupled to said openable/closeable member.

7. The structure as set forth in claim 3, 4, 5 or 6 wherein said conversion mechanism converts the lateral movement of said operation knob into rotational movement, and that said conversion mechanism includes a mechanism for changing said rotational movement to vertical movement.

8. The structure as set forth in any one of claims 1 to 7 further comprising:
a switch for detection of the lateral movement of said operation knob in response to the operator's operation; and
a driver device responsive to an output of said switch for driving said openable/closeable member to open and close said opening.
